# EUROPÄISCHE PATENTSCHRIFT

(11) **EP 3 465 568 B1**
(45) Veröffentlichungstag und Bekanntmachung des Hinweises auf die Patenterteilung: **28.07.2021**
(21) Anmeldenummer: 17722798.0
(22) Anmeldetag: 11.05.2017
(51) Int. Cl.: G06Q 10/08

(54) **VERFAHREN UND VORRICHTUNG ZUR INHALTSERFASSUNG EINES LAGERRAUMS**
METHOD AND APPARATUS FOR CAPTURING THE CONTENT OF A STORAGE SPACE
PROCÉDÉ ET DISPOSITIF DE DÉTECTION DE CONTENU D'UN ENTREPÔT

(30) Priorität: 31.05.2016 DE 102016209440
(43) Veröffentlichungstag der Anmeldung: 10.04.2019
(73) Patentinhaber: BSH Hausgeräte GmbH, 81739 München (DE)
(72) Erfinder: SCHLOSSER, Johannes, 73485 Unterschneidheim (DE); WIEDEMANN, Marcus, 89542 Herbrechtingen (DE); HEGER, Bernd, 89437 Haunsheim (DE)
(86) Internationale Anmeldenummer: PCT/EP2017/061339
(87) Internationale Veröffentlichungsnummer: WO 2017/207240

(56) Entgegenhaltungen:
- EP-A1- 1 174 667
- US-A1- 2008 047 282
- US-A1- 2011 192 901
- US-A1- 2014 244 289
- US-A1- 2014 316 561

## Beschreibung

Die vorliegende Erfindung betrifft ein Verfahren zur Inhaltserfassung eines Lagerraums, insbesondere eines Lagerraums eines Kältegeräts sowie Mittel zur Durchführung des Verfahrens.

Bereits in DE 100 60 154 A1 findet sich der Vorschlag, ein Kältegerät mit einer Verwaltungseinheit auszustatten, die eingerichtet ist, einen Ist-Vorratsbestand im Lagerraum des Kältegeräts mit einem Soll-Vorratsbestand zu vergleichen und eine als Ergebnis des Vergleichs erstellte Bedarfsliste an ein entferntes Endgerät zu übertragen, um ggf. die Auffüllung des Vorratsbestands zu veranlassen. Zur Erfassung des Ist-Bestands ist ein Lesegerät vorgesehen, das eingerichtet ist, um eine Kennzeichnung eines eingelagerten Gegenstandes zu lesen, wenn dieser zum Ist-Vorratsbestand hinzugefügt wird, und sie ein zweites Mal zu lesen, wenn er wieder entnommen wird.

Ein solches System ist nur praktikabel für die Verwaltung von Gegenständen, die eine maschinenlesbare Kennzeichnung mitbringen, wie etwa die meisten abgepackten Lebensmittel. Es ist nur eingeschränkt in der Lage, unterschiedlich gekennzeichneter Lebensmittel verschiedener Hersteller als gleich zu erkennen und bei der Erstellung der Bedarfsliste zu berücksichtigen. Das System kann nicht erkennen, wenn ein Lebensmittel zwar noch vorhanden aber wegen Überlagerung nicht mehr zu gebrauchen ist. Lebensmittel in ungekennzeichneten Behältern, insbesondere solche, die vom Benutzer selber umgefüllt oder weiterverarbeitet worden sind, werden nicht erfasst.

Die US 2014/0316561 A1 beschreibt einen Verkaufsautomaten mit einem gekühlten Lagerraum für mit RFID-Tags gekennzeichnete Lebensmittel und mit einem Lesegerät zum Abfragen der RFID-Tags. Der auf den Tags gespeicherten Information ist eine die Lebensmittel beschreibende Information zugeordnet. Indem vor und nach einem Öffnen des Lageraums die RFID-Tags ausgelesen werden, ist der Verkaufsautomat in der Lage, zu erkennen, welche Lebensmittel von einem Käufer entnommen worden sind.

Aufgabe der vorliegenden Erfindung ist daher, ein Verfahren zu schaffen, das einem Verbraucher mit einem Minimum an Arbeitsaufwand eine umfassende Überwachung seiner Bestände an Verbrauchsgütern in einem Lagerraum, insbesondere einem Lagerraum eines Kältegeräts, ermöglicht.

Die Aufgabe wird gelöst durch ein Verfahren gemäß Anspruch 1.

Die für den Datenträger spezifische Information muss lediglich die Unterscheidung des Datenträgers von allen anderen Datenträgern des Satzes ermöglichen; eine Verknüpfung dieser Information mit einem bestimmten Lagergut wird erst durch das Verbinden des Datenträgers mit dem Lagergut und das Erstellen des Datensatzes hergestellt. Dieser Vorgang kann für ein und denselben Datenträger beliebig oft wiederholt werden. Da auch ein Privatverbraucher ihn vornehmen kann, ist auch eine Erfassung von umgefülltem oder selbst erzeugtem Lagergut möglich. Mit Hilfe eines im Lagerraum angeordneten Lesegeräts kann das Ablesen der Datenträger im Lagerraum auch ohne Präsenz des Verbrauchers erfolgen. Die Ausgabe der gespeicherten lagergutspezifischen Information kann daher vollautomatisch, z.B. an einen Händler, erfolgen, wenn dieser basierend auf dieser Information bestimmtes Lagergut nachliefern soll, sie kann auch auf Anforderung des Benutzers, insbesondere per Datenfernübertragung, erfolgen, wenn dieser sich einen Überblick über den Vorratsbestand verschaffen und über Nachkäufe entscheiden will.

Da der Verbraucher selbst zubereitete Lebensmittel vor dem Einlagern in einen Kühlschrank in der Regel ohnehin in einen Behälter füllt oder Lebensmittel aus angebrochenen, nicht sicher wiederverschließbaren Verkaufsverpackungen umfüllt, ist der Schritt b) für den Verbraucher mit keinerlei zusätzlicher Arbeitsbelastung verbunden.

Wenn Schritt d) nach jedem Schließen des Lagerraums durchgeführt wird, kann dadurch erfasst werden, ob sich Änderungen im Lagerbestand ergeben haben.

Wenn etwa unter den abgelesenen Datenträgern einer ist, zu dem keine lagergutspezifische Information in der Datenbank hinterlegt ist, dann muss dieser während des Offenstehens der Tür neu in den Lagerraum gelangt sein. In diesem Fall kann die zum Erstellen eines Datensatzes zu diesem Datenträger benötigter lagergutspezifische Information vom Verbraucher angefragt werden, d.h. es kann eine Aufforderung an den Verbraucher ergehen, anzugeben, welche Art von Lagergut zu dem Datenträger gehört bzw. was sich in dem mit dem Datenträger versehenen Behälter befindet.

Eine zum Ausgeben dieser Aufforderung bzw. Eingeben der lagergutspezifischen Information benötigte Schnittstelle kann am Kältegerät oder am Lagerraum selber vorgesehen sein. Kostengünstiger und für den Verbraucher komfortabler kann jedoch die Nutzung eines mit dem Lesegerät und der Datenbank vernetzten mobilen Datenendgeräts wie etwa eines Tablet-PCs oder eines Smartphones sein.

Wenn in Schritt d) ein Datenträger nicht im Lagerraum gefunden wird, zu dem in der Datenbank ein Datensatz vorhanden ist, dann kann daraus gefolgert werden, dass das mit dem betreffenden Datenträger versehene Lagergut entnommen worden ist. Im einfachsten Fall kann dann angenommen werden, dass das Lagergut verbraucht ist, und der zugehörige Datensatz kann gelöscht werden; dann steht der Datenträger zur Nutzung für anderes Lagergut wieder zur Verfügung. Falls das Lagergut jedoch nicht oder nicht vollständig verbraucht wurde und zu einem späteren Zeitpunkt wieder in den Lagerraum eingestellt wird, dann müsste zu diesem Zeitpunkt auch der Datensatz neu erstellt werden. Deswegen wird vorzugsweise der Datensatz eines entnommenen Kühlguts nicht sofort gelöscht sondern lediglich als entnommen markiert. Falls dann bei einer späteren Wiederholung des Schritts d) der betreffende Datenträger wieder im Lagerraum gefunden wird, kann der vorhandene Datensatz weiterverwendet werden, oder eine Anfrage kann an den Verbraucher ausgegeben werden, in der dieser aufgefordert wird, zu entscheiden, ob der vorhandene Datensatz weiter gelten oder ein neuer erstellt werden soll.

Ein schneller und komfortabler Weg zum Erstellen des Datensatzes ist das Fotografieren des Lagerguts. Insbesondere wenn wie oben erwähnt die Anforderung der lagergutspezifischen Information an ein mobiles Datenendgerät gesendet wird, kann hierfür die in den meisten dieser Geräte eingebaute Kamera verwendet werden.

Das Ablesen der Datenträger erfolgt in Schritt d) vorzugsweise per Funk, da dafür keine spezielle Ausrichtung der Datenträger in Bezug auf das Lesegerät erforderlich ist. Als Datenträger kommen hier insbesondere preiswert verfügbare RFID-Transponder in Betracht, es können aber auch andere Standards wie etwa Bluetooth verwendet werden. Um in Schritt c) den Datensatz eines Lagerguts zu erstellen, ist es ebenfalls sinnvoll, die datenträgerspezifische Information von dem dem Lagergut zugeordneten Datenträger abzulesen. Dies kann wie oben beschrieben geschehen, indem der zugehörige Datenträger vom Lesegerät des Lagerraums gelesen und der Verbraucher daraufhin aufgefordert wird, den Datensatz durch die lagergutspezifischen Informationen zu ergänzen. Eine solche Vorgehensweise ist allerdings fehlerträchtig, falls mehrere Datenträger gleichzeitig neu in den Lagerraum gelangt sind; in diesem Fall kann es vorkommen, dass der Verbraucher die lagergutspezifischen Informationen den datenträgerspezifischen Informationen falsch zuordnet. Wenn mehrere Gegenstände gleichzeitig neu eingelagert werden sollen, ist erfindungsgemäß vorgesehen, ein Lesegerät bereitzustellen, mit dem gezielt, insbesondere durch Platzieren eines Datenträgers im Erfassungsbereich des Lesegeräts, die datenträgerspezifische Information eines bestimmten Datenträgers eingelesen werden und durch die zugehörige lagergutspezifische Information ergänzt werden kann. Dieses Lesegerät kann vom gleichen Typ wie das Lesegerät im Laderaum sein. Um allerdings dem Verbraucher die Kontrolle darüber zu erleichtern, welcher von mehreren einander nah benachbarten Datenträgern gelesen wird, ist erfindungsgemäß vorgesehen, dass der Datenträger die für ihn spezifische Information auch in optisch ablesbarer Form aufweist, und in Schritt c) das Ablesen der datenträgerspezifischen Information auf optischem Wege erfolgt. Auch hierfür ist die bereits erwähnte, in einem mobilen Datenendgerät eingebaute Kamera vorteilhaft nutzbar. Ein weiterer Vorteil der optischen Informationserfassung liegt darin, dass die datenträgerspezifische Information und die lagergutspezifische Information eines Lagergegenstandes erfindungsgemäß in einem gemeinsamen Bild enthalten sein können und somit ein einziges Bild zum Erzeugen des Datensatzes eines Lagergegenstandes ausreicht.

Zweckmäßigerweise sollte in den Datensatz auch noch ein Eintrag aufgenommen werden, der das Datum der Einbringung des Lagerguts in den Lagerraum oder ein davon abgeleitetes Datum, insbesondere ein Datum, bis zu dem das Lagergut verbraucht sein sollte, enthält. Auch das Datum der Einlagerung kann von einem üblichen mobilen Datenendgerät zusammen mit einem Bild des Lagerguts zur Verfügung gestellt werden. Gegenstände der Erfindung sind ferner ein Kältegerät, insbesondere ein Haushaltskältegerät, mit einem Lagerraum und einem Lesegerät zum berührungslosen Ablesen von Datenträgern, das am Lagerraum angeordnet ist, um in dem Lagerraum befindliche Datenträger abzulesen, eine Verwaltungseinheit, die mit einem Lesegerät eines Kältegeräts und einem mobilen Datenendgerät vernetzbar ist und eingerichtet ist, wenigstens die Schritte c) bis e) des oben beschriebenen Verfahrens auszuführen, und ein Computerprogramm-Produkt mit Programmcode-Mitteln, die einen Computer befähigen, als die oben beschriebene Verwaltungseinheit zu arbeiten.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: Komponenten eines Systems zur Durchführung des erfindungsgemäßen Verfahrens; und
- Fig. 2: ein Flussdiagramm einer bevorzugten Ausgestaltung des Verfahrens.

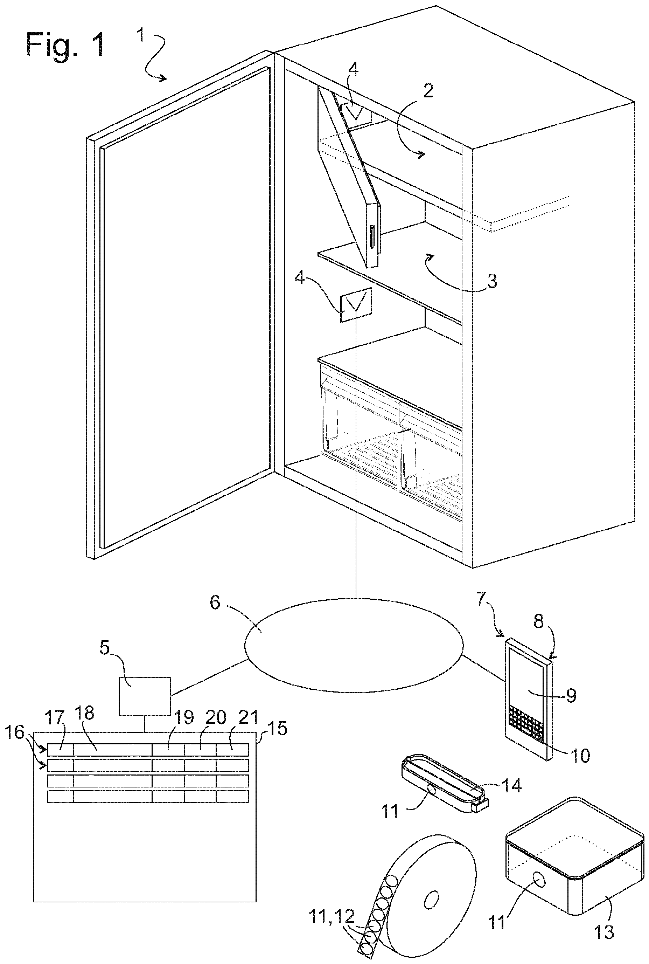

Fig. 1 zeigt ein Kältegerät 1, hier ein Kombinations-Haushaltskältegerät mit einem Gefrierfach 2 und einem Normalkühlfach 3. Jedes Fach 2, 3 kann für sich einen Lagerraum im Sinne der obigen Beschreibung bilden, es können aber auch beide Fächer 2, 3 zusammen als ein Lagerraum aufgefasst werden.

An jedem Fach 2, 3 ist ein RFID-Sender/Empfänger 4 als ein Lesegerät für die Kommunikation mit RFID-Tags von in den Fächern gelagertem Kühlgut angebracht. Die Fächer 2, 3 können gegeneinander abgeschirmt sein, so dass jeder Sender/Empfänger 4 nur Signale der Tags in seinem Fach empfängt.

Die Sender/Empfänger 4 sind mit einer Verwaltungseinheit 5 verbunden. Die Verwaltungseinheit 5 kann im Kältegerät 1 eingebaut sein; vorzugsweise ist sie aus dem Kältegerät 1 ausgegliedert und mit den Sender/Empfängern 4 über ein Netzwerk 6 verbunden. Z.B. kann die Verwaltungseinheit 5 auf einem PC implementiert sein, der zum gleichen Haushalt wie das Kältegerät 1 gehört und mit dessen Sender/Empfängern 4 z.B. über WLAN verbunden ist. Sie kann sich auch einem Computer eines Dienstleisters befinden, wobei dann das Netzwerk 6 ein öffentliches Fernmeldenetz oder das Internet umfassen kann.

An dasselbe Netzwerk 6 ist ein mobiles Endgerät 7 wie etwa ein Smartphone oder ein Tablet-PC angeschlossen. Das mobile Endgerät 7 verfügt in an sich bekannter Weise über eine eingebaute Kamera 8, einen Anzeigeschirm 9 und eine Schnittstelle 10 für die Eingabe von alphanumerischer Information.

Zum Zubehör des Kältegeräts gehört ein Satz von RFID-Tags 11. Diese können in unterschiedlichen Formen bereitgestellt werden, z.B. in Form von preiswerten Aufklebern 12, die an beliebige feste Oberflächen, z.B. von Einwegverpackungen angeheftet und nach Verbrauch des Inhalts zusammen mit den Verpackungen entsorgt werden können. Andere Tags 11 sind dauerhaft an mehrfach verwendbaren Kühlgutbehältern 13 oder an wiederverwendbaren zum Verschließen von Gefrierbeuteln verwendbaren Clips 14 angebracht. Jeder Tag 11 speichert eine für ihn spezifische, ihn von allen anderen Tags unterscheidende Information TID.

Eine Datenbank 15 der Verwaltungseinheit 5 enthält zu jedem Tag 11, der sich in einem der Fächer 2, 3 befindet, einen Datensatz 16 mit mehreren Einträgen 17 bis 21. Der Eintrag 17 enthält jeweils die TID des Tags 11. Der Eintrag 18 enthält Angaben zum Kühlgut, mit dem der betreffende Tag 11 körperlich verbunden ist. Der Eintrag 19 spezifiziert das Fach 2 oder 3, in dem sich der Tag 11 befindet; er kann fehlen, wenn jedem Fach 2, 3 eine eigene Datenbank zugeordnet ist. Die Funktion der Einträge 20, 21, 21 wird in Verbindung mit der Beschreibung des Verfahrens erläutert.

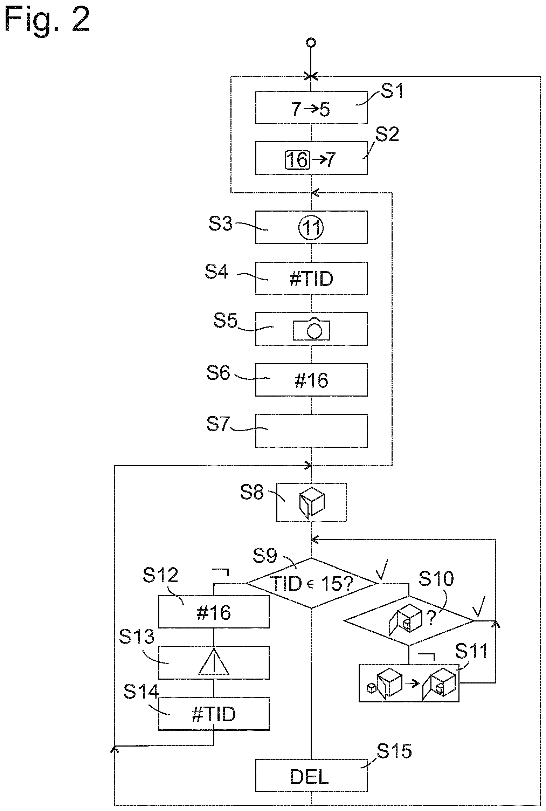

Das in Fig. 2 gezeigte Verfahren setzt ein zu einem Zeitpunkt, an dem der Benutzer des Kältegeräts 1 sich entschließt, Vorräte einzukaufen. Mit seinem mobilen Endgerät 7 nimmt er in Schritt S1 Kontakt zur Verwaltungseinheit 5 auf, um die Datenbank 15 einzusehen. Er kann von der Verwaltungseinheit 5 alle Datensätze 16 anfordern, denkbar ist aber auch, in Schritt S1 einen Suchfilter an die Verwaltungseinheit 5 zu übermitteln, so dass diese in Schritt S2 nur bestimmte Datensätze 16 an das Endgerät 7 zurückliefert, z.B. kann der Benutzer sich je nach Abteilung eines Supermarkts, in dem er sich gerade befindet, selektiv die Datensätze 16 zu frischem Obst und Gemüse, zu Fleisch und Wurstwaren oder zu Molkereiprodukten anzeigen lassen, um so schnell zu erkennen, welche Produkte aus der betreffenden Abteilung ggf. nachbesorgt werden müssen.

Diese Schritte können mehrfach wiederholt werden, bis der Benutzer alle seine Einkäufe erledigt hat.

Anschließend lädt der Benutzer seine Einkäufe daheim in das Kältegerät 1 ein. Dazu wählt er zu jedem Produkt, das nicht bereits einen Tag 11 des Herstellers mitbringt, einen geeigneten Typ von Tag 11 aus (S3). Für abgepackte Produkte, bei denen ein Umfüllen die Haltbarkeit beeinträchtigen würde, wie etwa Frischmilch, Joghurt oder dergleichen ist ein Aufkleber-Tag 11 geeignet, der auf die Verpackung des Produkts aufgeklebt wird. Bei Frischthekenprodukten wie etwa Käse oder Aufschnitt, die im Supermarkt üblicherweise in Tüten verpackt werden, kann ein Clip 14 mit Tag angebracht werden, oder sie werden in einen Behälter 13 mit Tag umgefüllt. So hat der Benutzer schließlich eine Mehrzahl von Kühlgutstücken vorliegen, die jeweils mit einem Tag 11 versehen sind.

Das Verbinden mit einem RFID-Tag 11 erübrigt sich für diejenigen vom Benutzer erworbenen Produkte, die bereits vom Hersteller mit einem solchen Tag ausgestattet worden sind. Solche Tags können dieselbe artikelspezifische Information wie die Strichcodes enthalten, die herkömmlicherweise an Supermarktkassen erfasst werden, um den vom Kunden zu entrichtenden Kaufpreis zu ermitteln und den Bestand der Artikel im Supermarkt zu überwachen.

Der Benutzer hat verschiedene Möglichkeiten, um im nächsten Verfahrensschritt S4 für jedes dieser Kühlgutstücke in der Datenbank 15 einen Datensatz 16 anzulegen. Wenn das mobile Endgerät 7 NFC-Kommunikation unterstützt, kann er es so nah an einen Tag 11 halten, dass die Information TID direkt auf dem Funkweg vom Tag 11 an das Endgerät 7 übertragen wird. Um im anschließenden Schritt S5 auf das mit dem Tag 11 gekennzeichnete Kühlgut bezogene Information in das Endgerät 7 einzugeben, kann er dessen Schnittstelle 10 nutzen, oder er macht mit der Kamera 8 ein Foto des Kühlguts.

In Schritt S6 werden die TID und die kühlgutbezogene Information an die Datenbank 15 weitergegeben und dort in einem gemeinsamen Datensatz 16 als Einträge 17, 18 abgelegt. Der Eintrag 20 dieses Datensatzes wird auf einen Wert gesetzt, der das betreffende Kühlgutstück als noch nicht im Kältegerät 1 aufgenommen kennzeichnet, und das aktuelle Datum und Uhrzeit werden im Eintrag 21 vermerkt.

Falls als kühlgutbezogene Information nur das von der Kamera 8 erzeugte Bild übertragen worden ist, oder ergänzend zu der vom Benutzer über die Schnittstelle 10 eingegebenen Information kann vorgesehen werden, dass die Verwaltungseinheit 5 aus dem Bild eine das Kühlgut beschreibende Textinformation oder Klassifikationsinformation ableitet (S7), anhand derer beim nächsten Einkauf des Benutzers auch die neuen Einträge 16 mit Hilfe von Filtern durchsucht und in Schritt S2 selektiv übertragen werden können. Diese Ableitung kann auf der Erkennung von in dem Bild sichtbaren Schriftzeichen, Strich- oder QR-Codes basieren; denkbar ist auch, dass die Verwaltungseinheit 5 zum übermittelten Bild ähnliche Bilder im Internet recherchiert, um aus mit diesen Bildern verknüpften Schlagwörtern auf den dargestellten Gegenstand zu schließen und so eine Textinformation zur Verfügung zu haben, die bei späterer Wiederholung des Schritts S2 mit geringerer Bandbreite als ein Bild an das Endgerät 7 übertragen und dort auf kleiner Anzeigefläche dargestellt werden kann.

Gemäß der Erfindung ist die Information TID eines jeden Tags 11 auch in optisch ablesbarer Form, z.B. als Strich- oder QR-Code an der Oberfläche des Tags 11 aufgedruckt. Dann kann der Benutzer sie mitfotografieren, wenn er mit der Kamera 8 ein Bild des Kühlguts aufnimmt, so dass die oben beschriebenen Schritte S4 des Erfassens der TID und S5 des Erfassens der kühlgutspezifischen Information für den Benutzer durch das Aufnehmen eines einzigen Fotos erledigt sind. Das Extrahieren der TID in Binärform aus den Bilddaten kann dann von der Verwaltungseinheit 5 unter Rückgriff auf bekannte Verfahren der elektronischen Bildverarbeitung erledigt werden.

Die Schritte S4-S6 und ggf. S7 werden für jedes mit einem Tag 11 versehene Kühlgutstück wiederholt.

Nachdem auf diese Weise Datensätze 16 für alle neuen Kühlgutstücke angelegt worden sind, lädt der Benutzer sie ins Kältegerät 1 ein. Wenn er damit fertig ist, schließt er die Tür des Kältegeräts 1. Wenn die Verwaltungseinheit 5 dies in Schritt S8 erkennt, beginnt sie, über die Sender/Empfänger 4 die RFID-Tags 11 in den Fächern 2, 3 anzusprechen und ihre TID abzufragen.

Wenn die TID eines der Tags im Kältegerät 1 empfangen wird, überprüft die Verwaltungseinheit 5 in Schritt S9, ob diese TID in einem der Datensätze 16 der Datenbank 15 enthalten ist. Wenn ja, und wenn der Eintrag 20 dieses Datensatzes das zugehörige Kühlgutstück als im Kältegerät 1 aufgenommen ausweist (S10), dann handelt es sich um Kühlgut, das schon vor dem Öffnen der Tür im Kältegerät 1 gewesen ist; in diesem Fall sind keine weiteren Maßnahmen erforderlich, und das Verfahren kehrt zu Schritt S9 zurück, um eine weitere empfangene TID zu verarbeiten.

Wenn der Eintrag 20 das Kühlgutstück als nicht im Kältegerät 1 aufgenommen ausweist, dann handelt es sich um eines der neuen Kühlgutstücke. In diesem Fall wird der Eintrag auf "im Kältegerät aufgenommen" geändert (S11), und das Verfahren kehrt zu Schritt S8 zurück, um, wenn vorhanden, eine weitere TID zu verarbeiten. Falls das Kältegerät wie in Fig.1 gezeigt mehrere Fächer 2, 3 hat, denen jeweils ein Sender/Empfänger 4 zugeordnet ist, dann kann im Eintrag 19 vermerkt werden, von welchem Sender/Empfänger 4 die TID empfangen wurde, d.h. in welchem Fach 2 oder 3 das Kühlgutstück sich befindet.

Wenn die TID in keinem der Datensätze 16 enthalten ist, dann muss sie von einem Kühlgutstück herrühren, dessen Tag 11 zuvor nicht den Schritten S4-S6 unterzogen worden ist oder bei dem die aufgedruckte TID fehlerhaft erkannt worden ist. In diesem Fall legt die Verwaltungseinheit in Schritt S12 einen neuen Datensatz 16 an, der die TID als Eintrag 17 enthält. Wenn die TID von einem vom Hersteller an einem Produkt angebrachten Tag 11 herrührt, dann kann die für den Eintrag 18 benötigte produktbezogene Information auch aus dem Tag 11 gelesen oder über das Netzwerk 6 aus einer öffentlich zugänglichen Datenbank abgefragt werden; in diesem Fall wird der Datensatz 16 mit der so erhaltenen Information ergänzt, und die Verwaltungseinheit 5 kehrt zu Schritt S8 zurück, um, wenn vorhanden, eine weitere TID zu verarbeiten. Wenn auf dem beschriebenen Wege keine produktbezogene Information zu erhalten ist, dann rührt sie höchstwahrscheinlich von einem Tag 11 her, den der Benutzer selber wie oben beschrieben mit dem Kühlgutstück verbunden hat. Daher erzeugt die Verwaltungseinheit 5 in Schritt S13 einen Fehlerhinweis, den sie an das Endgerät 7 oder an eine Benutzerschnittstelle des Kältegeräts 1 sendet.

Wenn während des letzten Offenstehens der Tür nur ein Kühlgutstück eingeladen worden ist, kann nur dieses Ursache des Fehlerhinweises sein. In diesem Fall genügt es, wenn der Benutzer auf die Fehlermeldung hin das Kühlgutstück noch einmal entnimmt und ein Foto von ihm aufnimmt, mit dem die Verwaltungseinheit dann den in Schritt S12 angelegten Datensatz ergänzt.

Falls zur gleichen Zeit genau ein Datensatz 16 auf "noch nicht im Kältegerät 1 aufgenommen" gesetzt ist, besteht eine hohe Wahrscheinlichkeit, dass die TID dieses Datensatzes falsch erkannt worden ist. Die Verwaltungseinheit 5 überträgt dann in Schritt S14 die kühlgutspezifische Information dieses Datensatzes 16 an das Endgerät 7, so dass der Benutzer das betreffende Kühlgutstück leicht identifizieren und dessen TID ein zweites Mal aufnehmen kann. Wenn er zu diesem Zweck das betreffende Kühlgutstück entnimmt und nach Zurückstellen ins Kältegerät 1 die Tür wieder schließt, führt dies zur Rückkehr des Verfahrens zu Schritt S8.

Wenn nach dem letzten Schließen der Tür eine vorgegebene Wartezeit verstrichen ist, erreicht das Verfahren Schritt S15. Diese Wartezeit ist typischerweise länger als die, die Kühlgut während einer Mahlzeit außerhalb des Kältegeräts bleibt, z.B. 2h. Nach dieser Zeit werden in Schritt S15 alle Datensätze 16 gelöscht, die noch auf "nicht im Kältegerät 1 aufgenommen" gesetzt sind.

Wenn der Benutzer Gegenstände aus dem Kältegerät 1 entnimmt, um sie für eine Mahlzeit auf den Tisch zu stellen, und die Tür wieder schließt, wird auch dies von der Verwaltungseinheit 5 erkannt und führt zur Rückkehr zu Schritt S8. Die entnommenen Gegenstände werden in S9 daran erkannt, dass ihre Tags 11 keine TID an die Verwaltungseinheit 5 liefern können; dementsprechend wird in ihren Datensätzen 16 der Eintrag 20 auf "nicht im Kältegerät aufgenommen" gesetzt.

Nach der Mahlzeit wird das nicht verbrauchte Kühlgut in das Kältegerät zurückgeräumt, und wiederum kehrt das Verfahren zu Schritt S8 zurück. Da für alle zurückgeräumten Gegenstände ein Datensatz 16 mit korrekter TID vorhanden ist, werden für diese Gegenstände jeweils die Schritte S10, S11 durchlaufen; Dateneingaben durch den Benutzer sind nicht erforderlich.

Gegenstände, die verbraucht worden sind und deshalb nicht zurückgeräumt werden, können in Schritt S9 keine TID an die Verwaltungseinheit 5 liefern. Ihre Einträge 20 bleiben daher auf dem Status "nicht im Kältegerät 1 aufgenommen", mit der Folge, dass sie bei der nächsten Durchführung des Schritts S15 gelöscht werden. Wenn der Tag 11 eines solchen Gegenstandes, z.B. nach Spülen und erneutem Befüllen des Behälters 12, an dem er angebracht ist, wieder verwendet werden soll, kann für ihn in den Schritten S4-S6 ein neuer Datensatz angelegt werden. Wenn er in das Kältegerät gelangt, ohne vorher diese Schritte durchlaufen zu haben, wird er in S9 als fremd erkannt und löst die Fehlermeldung S13 aus.

Alternativ kann zusätzlich zu den oben erwähnten Status "nicht im Kältegerät 1 aufgenommen" bzw. "im Kältegerät aufgenommen" ein dritter Status definiert werden, um ein entnommenes und vermutlich verbrauchtes Kühlgut zu kennzeichnen, und in Schritt 15 wird in der Datensatz eines nicht wieder eingeladenen Kühlguts nicht wie oben beschrieben gelöscht, sondern auf diesen dritten Status gesetzt. Dann kann, wenn zu einem späteren Zeitpunkt der RFID-Tag 11, dessen TID der datenträgerspezifischen Information 17 dieses Datensatzes gleicht, wieder im Kältegerät gefunden wird, eine Anfrage an den Benutzer ausgegeben werden, ob der alte Datensatz einschließlich seiner kühlgutspezifischen Information weiterverwendet oder ein neuer Datensatz erstellt werden soll.

Das jedem ordnungsgemäß in das Kältegerät 1 eingebrachten Tag 11 in Schritt S6 zugewiesene Datum ändert sich nicht, solange der entsprechende Datensatz 16 besteht. Der Benutzer kann dieses Datum in Schritt S1 als ein Abfragekriterium nutzen, um zu erkennen, welches Kühlgut sich am längsten im Kältegerät befindet und ggf. möglichst bald verbraucht werden sollte.

Basierend auf der vom Benutzer in Schritt S5 eingegebenen kühlgutspezifischen Information oder der daraus in S6 abgeleiteten Information kann die Verwaltungseinheit 5 auch selbststätig, ggf. unter Berücksichtigung des Eintrags 19, eine empfohlene maximale Lagerzeit eines Kühlgegenstands abschätzen, diese zum Datum der Einlagerung hinzuaddieren und das Ergebnis im Eintrag 21 des Datensatzes 16 dieses Kühlgegenstands ablegen. Dies gibt der Verwaltungseinheit 5 die Möglichkeit, selbststätig einen Hinweis an das Endgerät 7 ausgeben, wenn das berechnete Datum naht oder erreicht ist, um den Benutzer daran zu erinnern, dass der betreffende Kühlgegenstand verbraucht werden sollte. Indem dem Hinweis der Eintrag 18 des betreffenden Datensatzes beigefügt wird, wird dem Benutzer die Erkennung des Kühlgegenstands erleichtert.

Auch ein Schrank, ein Regal oder ein ganzes Zimmer können Lagerräume im Sinne des erfindungsgemäßen Verfahrens sein; die Übertragung des oben beschriebenen Verfahrens hierauf dürfte dem Fachmann keine Schwierigkeiten bereiten und wird daher hier nicht im Detail erläutert.

### Bezugszeichen

- 1: Kältegerät
- 2: Gefrierfach
- 3: Normalkühlfach
- 4: Sender/Empfänger
- 5: Verwaltungseinheit
- 6: Netzwerk
- 7: mobiles Endgerät
- 8: Kamera
- 9: Anzeigeschirm
- 10: Schnittstelle
- 11: RFID-Tag
- 12: Aufkleber
- 13: Kühlgutbehälter
- 14: Clip
- 15: Datenbank
- 16: Datensatz
- 17: Eintrag (TID)
- 18: Eintrag (kühlgutspezifisch)
- 19: Eintrag (Fach)
- 20: Eintrag (aufgenommen)
- 21: Eintrag (Datum)

## Patentansprüche

1. Verfahren zur Inhaltserfassung eines Lagerraums (2, 3) eines Kältegeräts (1), mit Hilfe eines im Lagerraum (2, 3) angeordneten Lesegeräts (4), mit den Schritten:
a) Bereitstellen eines Satzes von jeweils an einem Behälter (13) befestigten berührungslos ablesbaren Datenträgern (11), wobei jeder der Datenträger (11) eine für ihn spezifische Information (TID) enthält,
b) körperliches Verbinden eines der Datenträger (11) mit einem Lagergut durch Einfüllen des Lagerguts in den mit dem Datenträger (11) versehenen Behälter,
c) Erstellen (S4-S6) eines Datensatzes (16) durch eine Verwaltungseinheit (5), welche im Kältegerät (1) eingebaut oder aus dem Kältegerät (1) ausgegliedert und über ein Netzwerk verbunden sein kann, der die für den Datenträger (11) spezifische Information (17) mit für das mit dem Datenträger (11) verbundene Lagergut spezifischer Information (18) verknüpft, und Ablegen des Datensatzes (16) in einer Datenbank (15), wobei die datenträgerspezifische Information (TID) und die lagergutspezifische Information (18) des Lagerguts in einem gemeinsamen Bild enthalten sein können und somit ein einziges Bild zum Erzeugen des Datensatzes (16) des Lagerguts ausreicht,
d) Ablesen (S8) derjenigen Datenträger (11), die sich in dem Lagerraum (2, 3) befinden, durch die Verwaltungseinheit (5), welche mit dem Lesegerät (4) des Kältegeräts (1) vernetzbar ist,
e) Ausgeben (S2) der in der Datenbank (15) gespeicherten lagergutspezifischen Information (18) aus denjenigen Einträgen (16) der Datenbank (15), deren datenträgerspezifische Information (TID) abgelesen wurde, durch die Verwaltungseinheit (5),
f) Überprüfen (S9) durch die Verwaltungseinheit (5), ob unter den abgelesenen Datenträgern (11) einer ist, zu dem keine lagergutspezifische Information in der Datenbank hinterlegt ist, und
g) wenn ja, Anfordern (S13) von zum Erstellen eines Datensatzes (16) zu diesem Datenträger (11) benötigter lagergutspezifischer Information.

2. Verfahren nach Anspruch 1, wobei wenigstens Schritt d) (S8) nach jedem Schließen des Lagerraums (2, 3) durchgeführt wird.

3. Verfahren nach Anspruch 1 oder 2, wobei die Anforderung der lagergutspezifischen Information an ein mobiles Datenendgerät (7) gesendet wird.

4. Verfahren nach einem der vorhergehenden Ansprüche mit dem weiteren Schritt: h) Kennzeichnen oder Löschen (S15) eines Datensatzes (16), dessen Datenträger (11) in Schritt d) (S8) nicht im Lagerraum (2, 3) gefunden wurde.

5. Verfahren nach einem der vorhergehenden Ansprüche, wobei das Erstellen (S4, S5) des Datensatzes (16) das Fotografieren des Lagerguts und das Speichern des Fotos umfasst.

6. Verfahren nach einem der vorhergehenden Ansprüche, wobei das Ablesen der Datenträger (11) in Schritt d) per Funk erfolgt.

7. Verfahren nach einem der vorhergehenden Ansprüche, wobei in Schritt c) das Erstellen (S4, S5) des Datensatzes (16) das Ablesen (S4) der datenträgerspezifischen Information (TID) von dem Datenträger (11) in Verbindung mit dem Eingeben (S5) der für das mit dem Datenträger (11) verbundene Lagergut spezifischen Information umfasst.

8. Verfahren nach Anspruch 7, wobei in Schritt c) das Ablesen der datenträgerspezifischen Information (TID) mit einem außerhalb des Lagerraums befindlichen Lesegerät (8) erfolgt.

9. Verfahren nach Anspruch 7 oder 8, wobei der Datenträger (11) die für ihn spezifische Information (TID) in optisch ablesbarer Form aufweist, und dass in Schritt c) das Ablesen (S5) der datenträgerspezifischen Information (TID) auf optischem Wege erfolgt.

10. Verfahren nach einem der vorhergehenden Ansprüche, wobei in Schritt c) ein Eintrag (21) in den Datensatz (16) aufgenommen wird, der das Datum der Einbringung des Lagerguts in den Lagerraum (2, 3) oder ein davon abgeleitetes Datum enthält.

## Claims

1. Method for capturing the content of a storage space (2, 3) of a refrigeration appliance (1), with the aid of a reader (4) arranged in the storage space (2, 3), having the steps of:
a) providing a set of contactlessly readable data storage media (11) fastened to a container (13) in each case, wherein each of the data storage media (11) contains information (TID) specific thereto,
b) physically connecting one of the data storage media (11) to a stored product by filling the container provided with the data storage media (11) with the stored product,
c) generating (S4-S6) a data record (16) by means of a management unit (5) which can be built into the refrigeration appliance (1) or separate from the refrigeration appliance (1) and can be connected via a network which links information (17) specific to the data storage medium (11) with information (18) specific to the stored product connected to the data storage medium (11), and storing the data record (16) in a database (15), wherein the information (TID) specific to the data storage medium and the information (18) specific to the stored product can be contained in a common image and a single image is therefore sufficient for generation of the data record (16) for the stored product,
d) reading (S8) those data storage media (11) which are located in the storage space (2, 3), by means of the management unit (5) which can be networked with the reader (4) of the refrigeration appliance (1),
e) outputting (S2) the stored product-specific information (18) stored in the database (15) from those database (15) entries (16) for which the data storage medium-specific information (TID) was read by means of the management unit,
f) checking (S9) by means of the management unit (5) whether the read data storage media (11) include one for which no stored product-specific information is saved in the database,
g) if so, requesting (S13) stored product-specific information needed to generate a data record (16) for this data storage medium (11).

2. Method according to claim 1, wherein at least step d) (S8) is performed each time the storage space (2, 3) is closed.

3. Method according to claim 1 or 2, wherein the request for stored product-specific information is sent to a mobile data terminal (7).

4. Method according to one of the preceding claims, having the further step of:
h) identifying or deleting (S15) a data record (16) whose data storage medium (11) was not found in the storage space (2, 3) in step d) (S8).

5. Method according to one of the preceding claims, wherein the generation (S4, S5) of the data record (16) comprises photographing the stored product and saving the photo.

6. Method according to one of the preceding claims, wherein reading of the data storage medium (11) in step d) proceeds wirelessly.

7. Method according to one of the preceding claims, wherein in step c) generation (S4, S5) of the data record (16) comprises reading (S4) of the data storage medium-specific information (TID) from the data storage medium (11) together with inputting (S5) of the specific information for the stored product associated with the data storage medium (11).

8. Method according to claim 7, wherein in step c) reading of the data storage medium-specific information (TID) proceeds using a reader (8) located outside the storage space.

9. Method according to claim 7 or 8, wherein the data storage medium (11) has the information (TID) specific thereto in optically readable form, and in that reading (S5) of the data storage medium-specific information (TID) in step c) proceeds optically.

10. Method according to one of the preceding claims, wherein in step c) an entry (21) is included in the data record (16) which contains the date of introduction of the stored product into the storage space (2, 3) or a date derived therefrom.

## Revendications

1. Procédé de détection de contenu d'un espace de stockage (2, 3) d'un appareil frigorifique (1), à l'aide d'un appareil de lecture (4) disposé dans l'espace de stockage (2, 3), comprenant les étapes suivantes :
a) fourniture d'un ensemble de supports de données (11) à lecture sans contact fixés respectivement sur un récipient (13), chacun des supports de données (11) contenant une information spécifique (TID) au support de données,
b) liaison physique d'un des supports de données (11) à une denrée stockée par une insertion de la denrée stockée dans le récipient pourvu du support de données (11),
c) création (S4-S6) d'un jeu de données (16) par une unité de gestion (5), qui peut être intégrée dans l'appareil frigorifique (1) ou être séparée de l'appareil frigorifique (1) et être reliée via un réseau, lequel jeu de données associe l'information spécifique (17) au support de données (11) à une information spécifique (18) pour la denrée stockée reliée au support de données (11), et archivage du jeu de données (16) dans une base de données (15), dans lequel l'information spécifique au support de données (TID) et l'information spécifique à la denrée stockée (18) de la denrée stockée peuvent être contenues dans une image commune et ainsi une image unique suffit pour générer le jeu de données (16) de la denrée stockée,
d) lecture (S8) des supports de données (11) qui se trouvent dans l'espace de stockage (2, 3), par l'unité de gestion (5), qui peut être mise en réseau avec l'appareil de lecture (4) de l'appareil frigorifique (1),
e) édition (S2) de l'information spécifique à la denrée stockée (18) enregistrée dans la base de données (15) à partir des entrées (16) de la base de données (15) dont l'information spécifique au support de données (TID) a été lue, par l'unité de gestion (5),
f) vérification (S9) par l'unité de gestion (5), si, parmi les supports de données lus (11), il y en a un pour lequel aucune information spécifique à une denrée stockée n'est enregistrée dans la base de données, et
g) si oui, demande (S13) d'une information spécifique à une denrée stockée nécessaire pour créer un jeu de données (16) pour ce support de données (11).

2. Procédé selon la revendication 1, dans lequel au moins l'étape d) (S8) est exécutée après chaque fermeture de l'espace de stockage (2, 3).

3. Procédé selon la revendication 1 ou 2, dans lequel la demande d'information spécifique à une denrée stockée est envoyée à un appareil terminal mobile (7).

4. Procédé selon l'une des revendications précédentes, comprenant l'étape supplémentaire suivante :
h) marquage ou suppression (S15) d'un jeu de données (16) dont le support de données (11) n'a pas été trouvé dans l'espace de stockage (2, 3) à l'étape d) (S8).

5. Procédé selon l'une des revendications précédentes, dans lequel la création (S4, S5) du jeu de données (16) comprend la photographie de la denrée stockée et la mise en mémoire de la photo.

6. Procédé selon l'une des revendications précédentes, dans lequel la lecture du support de données (11) à l'étape d) est effectuée par radio.

7. Procédé selon l'une des revendications précédentes, dans lequel, dans l'étape c), la création (S4, S5) du jeu de données (16) comprend la lecture (S4) de l'information spécifique au support de données (TID) à partir du support de données en liaison avec l'introduction (S5) de l'information spécifique pour la denrée stockée reliée au support de données (11).

8. Procédé selon la revendication 7, dans lequel, dans l'étape c), la lecture de l'information spécifique au support de données (TID) s'effectue avec un appareil de lecture (8) se trouvant à l'extérieur de l'espace de stockage.

9. Procédé selon la revendication 7 ou 8, dans lequel le support de données (11) comprend l'information spécifique au support de données (TID) sous une forme optiquement lisible, et en ce qu'à l'étape c), la lecture (S5) de l'information spécifique au support de données (TID) s'effectue par voie optique.

10. Procédé selon l'une des revendications précédentes, dans lequel, dans l'étape c), une entrée (21) est enregistrée dans le jeu de données (16), qui contient la date de l'introduction de la denrée stockée dans l'espace de stockage (2, 3) ou une date déduite de celle-ci.
